# EUROPEAN PATENT APPLICATION

(11) **EP 1 460 571 A1**
(43) Date of publication of application: **22.09.2004**
(21) Application number: 03290675.2
(22) Date of filing: 18.03.2003
(51) Int. Cl.: G06F 17/60

(54) **Methods relating to agenda planning**

(71) Applicant: Hewlett-Packard Development Company, L.P., Houston, TX 77070 (US)
(72) Inventor: Riche, Stephanie, 38000 Grenoble (FR); Brebner, Gavin, 38410 St. Martin D'Uriage (FR)
(74) Representative: Lloyd, Richard Graham

(57) **Abstract**

An agenda planning system operative to assist an entity in scheduling a sequence of events each involving a resource, the system having a planning element operative to liaise with a resource data source associated with a resource, to schedule an event involving said resource, and a profile element operable to process entity profile data to provide entity preference data and to convey the entity preference data to the planning element, whereby the event may be scheduled in accordance with the entity preference data.

## Description

### Technical Field of the Invention

This invention relates, in broad terms, to the general field of agenda planning and time management systems, whereby human and electronic entities may schedule a sequence of events to improve the temporal efficiency with which such events occur. It will be understood, in that regard, that the term "agenda" is to be interpreted broadly, in that it encompasses a range of entities being schedules, lists, plans, programmes and timetables of items or events that need to be attended to, arranged, initiated or acquired. Particularly, although by no means exclusively, the invention relates to the more specific general field of queue management systems, whereby the time spent by an entity in a plurality of actual or virtual queues is kept to a minimum. Such systems, as will be appreciated, find application both in physical scenarios such as theme parks and also in virtual environments such as data-processing queues and the like.

### Background to the Invention and Overview of the Prior Art

In many areas of day-to-day life, queues constitute not only a frustration but also a real barrier to efficiency, as time spent waiting in queues is often entirely wasted. Examples of physical queues can be found in a variety of leisure pursuits, administrative functions and even in doctors' waiting rooms. In virtual environments, too, queues can give rise to difficulties, where data processing is conducted on a strict "first come, first served" basis.

WO 97/18534 (Sim, Leonard) discloses a queue management system aimed particularly at the operation of a theme park, in which visitors to the park use a number of docking stations to register in a virtual queue with the visitors then being alerted when it is time to take their place at the queue concerned. The system disclosed in WO'534 uses a single and central queue manager which is operative to oversee all the virtual Queues in the theme park with the Queue manager deciding, on behalf of the visitors, upon the most appropriate ride attendance sequence.

### Summary of the Invention

In accordance with one aspect of the present invention, there is provided an agenda planning system operative to assist an entity in scheduling a sequence of events each involving a resource, the system having a planning element operative to liaise with a resource data source associated with a resource to schedule an event involving said resource, and a profile element operable to process entity profile data to provide entity preference data and to convey the entity preference data to the planning element, whereby the event may be scheduled in accordance with the entity preference data.

The profile element may be operative to convey to the planning element only preference data that is relevant to the event being scheduled.

Preferably, the profile element is operative to prevent unprocessed profile data being conveyed to the planning element. As explained below, this can limit profile data exposure and thus improve security/privacy levels.

The planning element may be operative, having liaised with the resource data source, to convey to the entity a provisional time-slot for the event concerned.

The planning element, on receiving an "accept" communication from the entity, may be operative to confirm the provisional time-slot with the resource data source.

The resource data source may then be operative to return, to the planning agent, an acceptance token.

The resource may operatively be associated with an access control element whereby the entity's access thereto is dependent upon the entity having a valid acceptance token.

The resource data source may be operative to convey, to the access control element, information relating to the returned acceptance token.

The system may have an entity-specific supervisor element representative of the temporal resource of the entity, the supervisor element being operative to oversee the sequence scheduling and to convey relevant aspects of the temporal resource to the planning agent, whereby the sequence of events is scheduled in accordance with the entity's temporal constraints.

The supervisor element may be operative to convey to the planning element information relating to any previously-scheduled events, to avoid any conflicts with subsequently-scheduled events.

The system may also comprise a scheduler element operative, in response to a request from the supervisor element, to identify or convey to the supervisor element an appropriate planning element for the requested resource.

Whilst the entity may, in some embodiments, comprise an electronic data item, the entity preferably comprises a human user of the system.

At least one of the planning element, profile element, supervisor element and scheduler element may be resident or stored on a mobile communications device such as a mobile telephone or Personal Digital Assistant (PDA).

Alternatively or in addition, one or more of the various elements may be provided in a computer network environment.

The at least one element may operate using an Internet Protocol, conveniently HTTP.

In hand with that, one or more of the various elements may comprise software elements. At least two of the software elements may have independent functionality. In a preferred embodiment, the software elements comprise agents.

### Brief Description of the Drawings

Specific and non-limiting embodiments of the present invention will now be described with reference to the accompanying drawings, of which:
FIGURE 1 is a domain model showing the principal components having a role in the system concerned; and
FIGURE 2 is a message sequence diagram showing how the various components interact and exchange data, as the system is put into operation.

### Detailed Description of the Drawings and Best Mode of the Invention

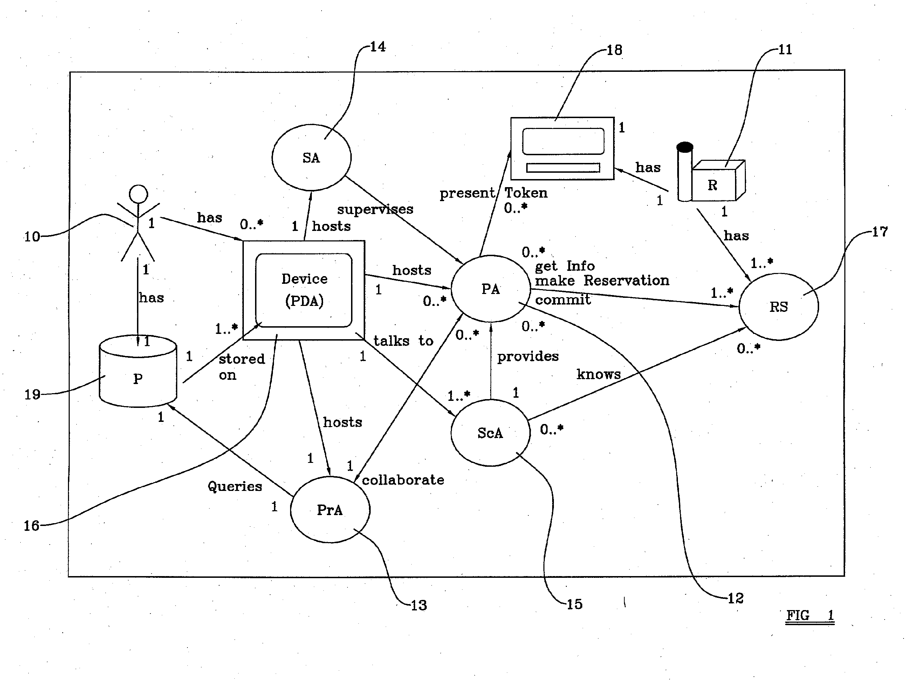

Referring to the figures, Figure 1 is a domain model identifying the main players in the present system, with the term "domain model" referring, in generally conventional manner, to a visualisation of the system's components in which links and associations are displayed, together with hierarchical indicia showing control and supervisory relationships existing within the system. Between them, the Figures, which illustrate a preferred embodiment of the invention, in which an entity, represented by a user 10, wishes to avail himself of a resource 11, the system comprises a planning element, a profile element, a supervisor element and a scheduler element in the forms of a planning agent 12, profile agent 13, supervisor agent 14 and a scheduler agent 15, each of which is software-based. As will be understood by those well-versed in the art of software design, software agents, being autonomous entities capable of interaction with their environment, are also able to interact with other software agents on a variety of infrastructures and operating platforms. Although a group of agents, as a whole, is often able to solve complex problems, each agent, in isolation, has well-defined boundaries and roles, meaning that the various elements, in this preferred embodiment, constitute distinct components having independent software functionality. It will be understood, however, that the use of software agents constitutes just one embodiment and that the use of other types of element is also envisaged by the applicants.

A portable communications device such as a PDA (Personal Digital Assistant) 16, owned/operated by the user 10, hosts (i.e. stores) the supervisor agent 14 which embodies the temporal (time-based) resource of the user 10. Thus, the supervisor agent 14 is aware of the user's existing commitments and appointments and is thus able to use this prior knowledge in an overseeing capacity as subsequent events are scheduled. The PDA 16 also hosts the planning agent 12 which may be a generic software element or may be more resource-specific, as explained hereafter. The PDA 16 also hosts the profile agent 13 and it can thus be seen that the system described in this embodiment is very user-centric, in that much of the data processing and data gathering capabilities are stored on or accessible via the user's PDA 16.

The resource 11, which, in this example, is a theme park attraction, at which a physical queue of people invariably will build up, is provided with a web-based resource data source 17, which handles and provides information characterising the resource such as the current actual queue length, statistics concerning queue lengths as a function of the hour of the day, and information relating to any current virtual queue length, for example. The resource data source thus constitutes a virtual picture of the actual resource 11, with the resource data source 17 being able to convey this information to interested parties, as explained hereafter. The resource 11 is also provided with a physical gate keeper 18 which allows and denies access to the resource 11 in accordance with predetermined criteria. This, too, is explained in more detail hereafter.

The profile agent 13 is operatively associated or linked to a user profile personal data store 19, in which is contained a plurality of different types of personal profile data relating to the user 10. It should be noted, in that regard, that the data store 19 may well include a variety of data types that are not relevant to the operation of the present system. The profile agent 13 is able to query the profile data store 19, in response to a request from the planning agent 12 so that subsequent schedule planning may take account of any pertinent profile characteristics. It should be noted, in that regard, that suitable security mechanisms may be employed to protect the privacy of the profile data contained within the store 19: thus, only certain pre-identified requestors may be given access to the data contained therein, for example.

It should also be noted, referring still to Figure 1, that the planning agent 12 may, in some embodiments, be provided by the scheduler agent 15, in response to a request from the PDA 16, by downloading a piece of code, for example.

The various agents, in a preferred embodiment, communicate using an Internet Protocol such as HTTP.

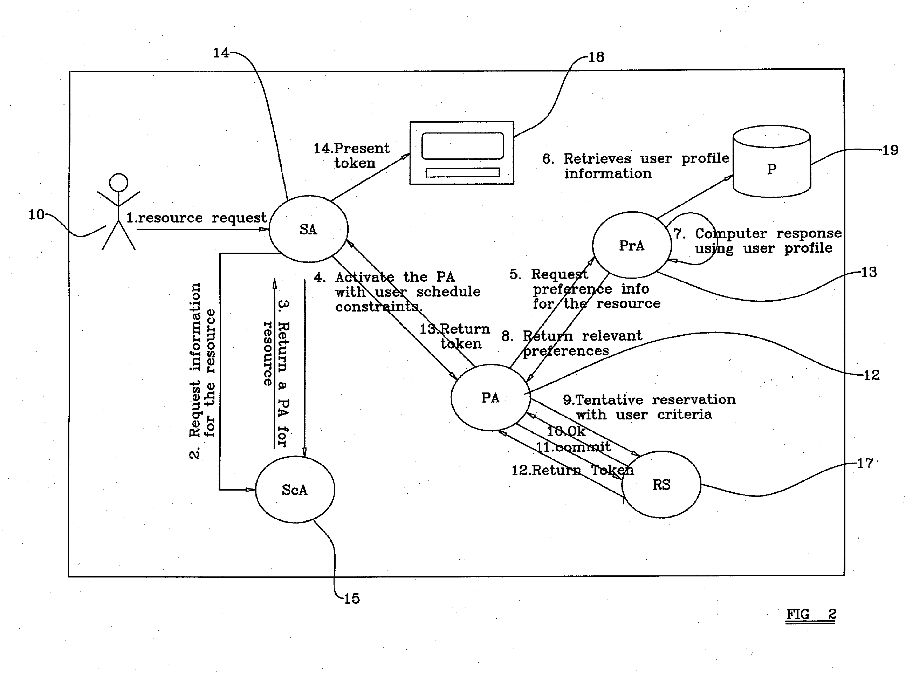

Referring next, in addition, to Figure 2, there will now be given a detailed explanation of how the system may be put into operation.

The sequence of steps begins with the user 10 sending a resource allocation request to the supervisor element 14 residing on his PDA. The supervisor element 14 then looks for a scheduler agent associated with the requested resource and seeks information, from the scheduler agent 15, relating to that particular resource. The scheduler agent may, in response to this request, return simple information relating to the resource, in which case a generic planning agent can be used, or the scheduler agent may, as an alternative, return a dedicated planning agent, as shown at step 3 in Figure 2. This dedicated planning agent may enable the user 10 to make use of a more user-friendly GUI (Graphical User Interface) with the dedicated planning agent also perhaps being able to offer added benefits, functionality and financial discounts to the user, insofar as the associated resource is concerned. Whichever type of planning agent is invoked, the supervisor agent then starts to control the planning agent, giving the planning agent any schedule and time constraints of which the supervisor agent is already aware. In this way, the supervisor agent has a global view of the user's schedule, which allows it to assume an overseeing role insofar as subsequent scheduling is concerned. The planning agent 12 then requests profile information that will enable it to liaise with appropriate resource data sources 17 on an informed basis, in that user preference information may be taken into account. To do this, the profile agent seeks user profile information from the profile data store 19 and processes the returned data so as to provide an output, back to the planning agent 12, that reflects pertinent preferences of the user 10. This processing step, therefore, in effect acts as a filter, in that irrelevant and confidential profile data is not returned to the planning agent 12. This limits profile data exposure and serves to maintain a good degree of security and privacy. All that is returned to the planning agent 12 is a processed version of a subset of the profile data, in the form of preference limitations which the planning agent can use in a later liaising process.

With the benefit of the returned user preferences, the planning agent 12 then liaises with the resource data source 17 and seeks a tentative/provisional reservation or time-slot which is compatible with the user's existing schedule. On the assumption that the resource 11 is able to comply with this provisional request, a positive response is returned to the planning agent 12, which is then operative to seek confirmation, from the user 10, that the reservation is in fact still appropriate. It will be understood, in this regard, that the user's existing schedule may have changed in the recent past. On the assumption, however, that the provisional reservation is acceptable to the user, the user, by way of his PDA 16, returns an "accept" communication to the resource data source 17. Upon receipt of the "accept" communication, the resource data source returns, to the planning agent, an acceptance token which may be in the form of an encrypted code, with the token acting subsequently as an access key, to allow the user access to the resource concerned. In order to allow/prevent such access, each resource is provided with a gate keeper 18 which, at its simplest level, may simply comprise an input device operate to receive tokens from a plurality of users, and to allow access to the resource concerned where a valid token is detected.

It will be appreciated, in that regard, that entry to the resource is not necessarily linked directly to the resource data source: thus, a very simple gate keeper can be used, with there being no necessity for the resource data source even to be functioning when the gate keeper operation is effected. In other words, problems/failures associated with resource data sources, whilst potentially impeding new reservations, will do nothing to affect previous commitments and previously-issued acceptance tokens.

What will be understood from the foregoing is that the invention provides an agenda planning system which offers a high degree of user-centric personalisation which is also distributed, in that the various operations required to effect reservations are performed by distinct and disparate entities. As shown by the domain model in Figure 2, each PDA 16 may be in communication with a plurality of scheduler agents and may host a plurality of planning agents, meaning that multiple reservations across many organisations and operating platforms may be effected. In hand with that, the system is lightweight on the resource side, in that the reservation negotiations are handled by third parties, acting on behalf of the resources. This means that resource providers need not be burdened with the requirement of a costly IT infrastructure: all that is required is an associated resource data source to represent, on a virtual basis, the operation of and demand for the resource concerned, and a simple gate keeper to allow access to the resource concerned at the appropriate time. The simplicity of the resource data source and gate keeper, in terms of their processing and connectivity attributes, also means that installation and maintenance costs can be kept relatively low. Perhaps most importantly, however, the system allows the user to plan an agenda on the basis of personal preference information, with a high degree of confidentiality being maintained insofar as the user profile data store is concerned.

It should also be understood that, whilst in the preferred embodiment explained above, profile information is obtained on an automated basis, it is equally envisaged that pertinent profile/preference data could be input directly to the PDA 16 by the user 10. It will also be understood that the system explained above may also find application in virtual queuing scenarios such as data queues and the like.

By way of example, a human user may, at a given time, wish to view an English movie on a mobile communications device such as a PDA, with a special requirement being that French subtitles are provided. A remote provider, having a copy of the requested movie in (for example) DVD format may not, itself, have a French translation available. The service provider thus needs to invoke an English to French translation service and a subtitle service having, as an input, the French oral translation and having, as an output, French-language text. At a data-flow level, the service provider needs to invoke a service having DVD input and, for example, an MPEG file output, together with a second service that is able to compress the MPEG data so that it becomes compatible with the limited processing power of the PDA.

In order to effect this, the service provider will need to make use of several distributed (i.e. distinct) processing resources and will select the most appropriate services according to its constraints - principally time (in that the movie must be available in the required format, within a two hour time slot) and cost. The service provider, in accordance with the system described above, is able to make allocation requests to several data processing resources and to select the most appropriate services by accepting the relevant tentative reservations, in accordance with the user's constraints.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An agenda planning system operative to assist an entity in scheduling a sequence of events each involving a resource, the system having a planning element operative to liaise with a resource data source associated with a resource, to schedule an event involving said resource, and a profile element operable to process entity profile data to provide entity preference data and to convey the entity preference data to the planning element, whereby the event may be scheduled in accordance with the entity preference data.

2. A system according to claim 1 wherein the profile element is operative to convey to the planning element only preference data that is relevant to the event being scheduled.

3. A system according to claim 1 or claim 2 wherein the profile element is operative to prevent unprocessed profile data being conveyed to the planning element.

4. A system according to claim 1, claim 2 or claim 3 wherein the planning element is operative, having liaised with the resource data source, to convey to the entity a provisional time-slot for the event concerned.

5. A system according to claim 4 wherein the planning element, on receiving an "accept" communication from the entity, is operative to confirm the provisional time slot with the resource data source.

6. A system according to claim 5 wherein the data source is operative to return, to the planning agent, an acceptance token.

7. A system according to any one of the preceding claims wherein the resource is operatively associated with an access control element whereby the entity's access thereto is dependent upon the entity having a valid acceptance token.

8. A system according to claim 7 wherein the resource data source is operative to convey, to the access control element, information relating to the returned acceptance token.

9. A system according to any one of the preceding claims further comprising an entity-specific supervisor element representative of the temporal resource of the entity, the supervisor element being operative to oversee the sequence scheduling and to convey relevant aspects of the temporal resource to the planning agent whereby the sequence of events is scheduled in accordance with the entity's temporal constraints.

10. A system according to claim 9 wherein the supervisor element is operative to convey to the planning element information relating to any previously-scheduled events, to avoid any conflict with subsequently-scheduled events.

11. A system according to claim 9 or claim 10 further comprising a scheduler element operative, in response to a request from the supervisor element, to identify or convey to the supervisor element an appropriate planning element for the requested resource.

12. A system according to any one of the preceding claims wherein the entity is a human user of the system.

13. A system according to any one of the preceding claims wherein at least one of the planning element, profile element, supervisor element and scheduler element is resident or stored on a mobile communications device such as a mobile telephone or Personal Digital Assistant.

14. A system according to any one of the preceding claims wherein at least one of the planning element, profile element, supervisor element and scheduler element is provided in a computer network environment.

15. A system according to Claim 14 wherein the at least one element operates using an Internet Protocol.

16. A system according to Claim 15 wherein the Internet Protocol is HTTP.

17. A system according to any one of the preceding claims wherein one or more of the elements are software elements.

18. A system according to Claim 17 wherein at least two of the software elements have independent functionality.

19. A system according to Claim 18 wherein the software elements are agents.
